# EUROPÄISCHE PATENTSCHRIFT

(11) **EP 1 724 158 B1**
(45) Veröffentlichungstag und Bekanntmachung des Hinweises auf die Patenterteilung: **26.09.2012**
(21) Anmeldenummer: 06110038.4
(22) Anmeldetag: 16.02.2006
(51) Int. Cl.: B60R 16/03, H02J 1/10, H02J 7/14

(54) **Bordnetz mit Hochlastverbraucher**
Vehicle power grid with high power load
Réseau de bord de véhicule automobile avec une charge électrique de puissance élevée

(30) Priorität: 07.04.2005 DE 102005015995
(43) Veröffentlichungstag der Anmeldung: 22.11.2006
(73) Patentinhaber: ROBERT BOSCH GMBH, 70442 Stuttgart (DE)
(72) Erfinder: Bauer, Uwe, 71701 Schwieberdingen (DE); Fassnacht, Jochen, 78713 Schramberg (DE)

(56) Entgegenhaltungen:
- EP-A2- 1 137 150
- WO-A1-02/066293
- DE-A1- 4 028 242
- DE-C1- 4 138 943

## Beschreibung

Die Erfindung betrifft ein Bordnetz zur Versorgung eines Hochlast- bzw. Hochleistungsverbrauchers sowie weiterer Verbraucher mit den Merkmalen des Anspruchs 1.

### Stand der Technik

Das Bordnetz in einem Kraftfahrzeug wirkt beim Einsatz von Hochleistungsverbrauchern, insbesondere Kurzzeit-Hochleistungsverbrauchern wie elektrohydraulischer Bremse EHB oder EPS oftmals begrenzend, da es die benötigte elektrische Leistung nicht schnell genug zur Verfügung stellen kann. Der Generator, der die elektrische Leistung bzw. Energie für das Bordnetz liefert, kann die von den elektrischen Verbrauchern einschließlich der Kurzzeit-Hochleistungsverbraucher benötigte Leistung bei höherer Motordrehzahl zwar dauerhaft liefern, problematisch ist aber, dass die Leistungsanforderung der Hochleistungsverbraucher teilweise sehr schnell ansteigt. Dieser Leistungsanstieg liegt in der Größenordnung von wenigen Millisekunden, der Generator kann die benötigte Leistung jedoch bauartbedingt erst nach mehreren hundert Millisekunden bereitstellen.

Es gibt daher verschiedene Ansätze, diese Problematik zu bewerkstelligen. Eine schnelle Drehmomentanregelung beispielsweise wäre eine Möglichkeit, auf die Zuschaltung von Hochleistungsverbrauchern zu reagieren. Eine solche schnelle Drehmomentanregelung könnte sich jedoch störend im Triebstrang des Fahrzeugs bemerkbar machen und beispielsweise zu unerwünschten Drehzahlschwankungen führen. Ein weiterer Ansatz besteht darin, zur Pufferung der schnellen Anregelvorgänge die Fahrzeugbatterie zu verwenden. Dabei bricht die Bordnetzspannung bei der Zuschaltung der Hochleistungsverbraucher kurzzeitig ein, dies kann beispielsweise zu Lampenflackern führen. Außerdem kann diese, der Batterie entnommene und später auch dem Generator wieder zugeführte Energie zu einer Zyklisierung der Batterie führen, was zu einer vorzeitigen Alterung und zum Ausfall der Batterie führen kann. Bei Ausfall der Batterie könnten Leistungsspitzen der Verbraucher bis zur Entregung des Generators führen.

Ein weitere Ansatz zur Lösung des Problems des Zuschaltens von Hochleistungsverbrauchern versucht, mit einem zusätzlichen Speicher den schnell anregelnden Hochlastverbraucher vom restlichen Bordnetz zu trennen, wobei dazu zwischen dem Hochlastverbraucher und dem restlichen Bordnetz ein Schalter anzuordnen ist. Ein Beispiel für ein solches Bordnetz zur Versorgung mindestens eines Hochlast- bzw. Hochleistungsverbrauchers sowie weiterer Verbraucher unter Einsatz eines Generators wird beispielsweise in der DE 10 25 15 89 A1 beschrieben.

Aus der DE-A-40 28 242 (D1) ist ein Zwei-Batteriensystem bekannt. Bei einem Bordnetz für Kraftfahrzeuge mit einem Generator, einem Starter, einer Starterbatterie und einer Bordnetzbatterie zur Versorgung von Bordnetzverbrauchem ist die Verbindung zwischen Starterbatterie und Bordnetzbatterie unabhängig vom Fahrzustand auftrennbar, wenn andernfalls die Bordnetzbatterie aus der Starterbatterie aufgeladen werden würde.

### Vorteile der Erfindung

Das erfindungsgemäße Bordnetz mit Hochlast- bzw. Hochleistungsverbraucher oder-Verbrauchern hat den Vorteil, dass eine Zyklisierung, also einen häufige Kurzzeitbelastung der Bordnetzbatterie gegenüber herkömmlichen Bordnetzen deutlich verringert wird. Erzielt wird dieser Vorteil, indem ein Bordnetz mit Hochlast- bzw. Hochleistungsverbraucher so ausgestaltet ist, dass der oder die Hochleistungsverbraucher mit Hilfe eines eigenen Kondensators versorgt wird, der über einen Schalter vom übrigen Bordnetz getrennt werden kann. Ein besonderer Vorteil ist dabei, dass der Hochlastverbraucher, insbesondere ein Kurzzeit-Hochlast- bzw. Hochleistungsverbraucher direkt mit dem Kondensator gepuffert an den Generator angeschlossen wird und das restliche Bordnetz, das die übrigen Verbraucher sowie die Bordnetzbatterie, also beispielsweise eine herkömmliche Blei-Säure-Batterie umfasst, dann abtrennbar ist bzw. abgetrennt wird, wenn der Hochlast- bzw. Hochleistungsverbraucher zum Einsatz kommt.

Weitere Vorteile der Erfindung werden durch die in den Unteransprüchen angegebenen Maßnahmen erzielt. Dabei ist besonders vorteilhaft, dass der Kondensator als Doppelschichtkondensator ausgestaltet ist und der Schalter als MOSFET-Schalter. In vorteilhafter Weise bildet der oder die Hochlastverbraucher, insbesondere Kurzzeit-Hochlastverbraucher oder mehrere Kurzzeit-Hochlastverbraucher zusammen mit dem Kondensator und dem Generator ein Inselbordnetz, das bei vorgebbaren Bedingungen mit Hilfe des MOSFET-Schalters vom Bordnetz mit der Fahrzeugbatterie und dem Starter getrennt wird.

In besonders vorteilhafter Weise wird der Trennschalter so angesteuert, dass abhängig von bestimmten Spannungsgrenzen ein Öffnen oder Schließen des Schalters erfolgt. Dazu wird die Spannung an vorgebbaren Stellen gemessen und mit Hilfe von Schwellwertschaltem mit geeigneten Schwellwerten verglichen.

### Zeichnung

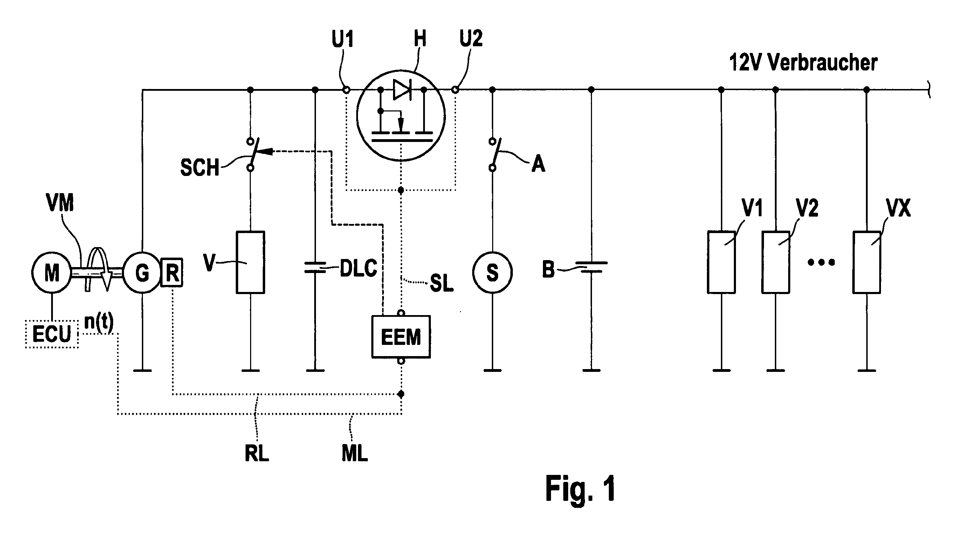

Ein Ausführungsbeispiel der Erfindung ist in der Zeichnung dargestellt und wird in der nachfolgenden Beschreibung näher erläutert.

### Beschreibung

Ein erfindungsgemäßes Ausführungsbeispiel für ein Bordnetz mit Hochleistungs- bzw. Hochlastverbraucher ist in der Figur dargestellt. Im Einzelnen bezeichnet G den Generator, der in üblicher Weise von einem Verbrennungsmotor M über entsprechende Verbindungsmittel VM angetrieben wird. Die Ausgangsspannung des Generators G wird mit Hilfe eines Spannungsreglers R auf vorgebbare Werte geregelt. Die Regelung des Verbrennungsmotors M erfolgt mit Hilfe des Motorsteuergerätes ECU, das insbesondere die Drehzahl n(t) des Verbrennungsmotors M mißt und damit infolge der Kopplung VM zwischen Verbrennungsmotor M und Generator G auch die Drehzahl des Generators bestimmt.

Der Generator G, insbesondere ein Drehstromgenerator stellt letztendlich die elektrische Energie für das Bordnetz bereit. Direkt an den Generator G angeschlossen ist ein oder mehrere Hochlast- bzw. Hochleistungsverbraucherverbraucher V, insbesondere ein Verbraucher, der die elektrische Leistung schnell und kurzzeitig benötigt, sowie ein Ladungsspeicher DLC, beispielsweise ein Kondensator oder ein Doppelschichtkondensator oder ein sonstiger Ladungsspeicher, der seine gespeicherte Ladung schnell abgeben kann. Die Parallelschaltung aus Generator G, Hochlastverbraucher V oder gegebenenfalls auch mehreren Hochlastverbrauchern und Kondensator DLC ist über einen Schalter, insbesondere einen Halbleiterschalter H mit dem restlichen Bordnetz verbindbar.

Vom restlichen Bordnetz ist die Bordnetzbatterie B sowie der Starter S dargestellt, der über den Anlassschalter A einschaltbar ist. Parallel zur Batterie sind Verbraucher V1, V2 bis VX geschaltet, die entweder direkt mit der Bordnetzbatterie B verbunden sind oder über zugehörige, nicht dargestellte Schalter zu- bzw. abschaltbar sind. Die Betätigung des Schalters, insbesondere Haltleiterschalters H erfolgt mit Hilfe des Elektrischen Energiemanagements EEM, das über eine Steuerleitung SL mit dem Schalter H in Verbindung steht. Weiterhin steht das Elektrische Energiemanagement EEM über eine Leitung RL mit dem Regler R in Verbindung sowie über eine weitere Leitung ML mit dem Motorsteuergerät ECU und erhält über diese Verbindungsleitungen die für das Energiemanagement benötigten Informationen vom Motorsteuergerät bzw. vom Spannungsregler R. Sind bidirektionale Verbindungen vorgesehen, können auch Informationen oder Ansteuersignale vom Elektrischen Energiemanagement EEM zum Regler R oder zum Motorsteuergerät ECU gelangen.

Das Elektrische Energiemanagement EEM kann als eigenständiges Steuergerät mit Prozessor und Speichern ausgestaltet sein oder Bestandteil eines anderen Steuergerätes sein. Das Elektrische Energiemanagement EEM führt die jeweils erforderlichen Auswertungen der zugeführten Information sowie erforderliche Berechnungen durch, zur Bildung von Ansteuersignalen, beispielsweise zur Ansteuerung des Halbleiterschalters H.

Die Spannung U1 generatorseitig und U2 auf der vom Generator entfernt liegenden Seite des Halbleiterschalters H werden beispielsweise mit Hilfe geeigneter Spannungsmesser ermittelt und über zugeordnete Verbindungen dem Elektrischen Energiemanagement EEM zugeführt.

Die in der Figur dargestellte Bordnetztopologie ermöglicht es, dass ein Inselbordnetz , bestehend aus dem oder den Kurzzeit-Hochlastverbrauchern V, einem Kondensator DLC und dem Generator G gebildet wird. Dieses Inselbordnetz kann mit dem Schalter H, beispielsweise einem MOSFET-Schalter unter bestimmten vorgebbaren Bedingungen vom restlichen Bordnetz mit der Batterie B und dem Starter S getrennt werden oder mit diesen in Verbindung stehen, je nachdem wie die Spannungsversorgungslage im Einzelnen ist. Die Funktionsweise bei verschiedenen Betriebszuständen lässt sich wie folgt darstellen:

Wenn der Kurzzeit-Hochlastverbraucher V keine Energie benötigt bzw. nicht an den Speicher DLC angeschlossen ist, beispielsweise bei geöffnetem Schalter SCH, wird die Spannung U1 des Kondensators DLC auf dem Niveau der Generatorausgangsspannung gehalten und über den geschlossenen Schalter H die Batterie B geladen bzw. das restliche Bordnetz mit den 12 Volt-Verbrauchern V1 bis VX mit Energie versorgt. Die Ansteuerung des Schalters SCH kann vom Elektrischen Energiemanagement EEM oder durch eine sonstige Ansteuerung erfolgen. Es ist auch möglich, dem Elektrischen Energiemanagement EEM die Information zuzuführen, dass der Hochlastverbraucher zugeschaltet wird bzw. elektrische Leistung benötigt.

Bei Zuschaltung des oder der Kurzzeithochlastverbraucher V sinkt die Kondensatorspannung U1 und der Schalter H trennt die Batterie B und das restliche Bordnetz vom Hochlastverbraucher. Die Ansteuerung des Schalters H wird dabei vom elektrischen Energiemanagement vorgenommen, das entsprechende Ansteuerimpulse an den Schalter H abgibt. Durch das Öffnen des Schalters H tritt im restlichen Bordnetz kein Spannungseinbruch auf und die Spannung U2 bleibt auf dem üblichen Wert. Die Bordnetzbatterie B wird nicht belastet und die Zuschaltung des Hochlastverbrauchers führt nicht zu einer Zyklisierung der Batterie B, d.h. ein Lade-/Entladezyklus wird eingespart.

Der Regler R reagiert auf die sinkende Spannung U1 und regelt den Generator entsprechend hoch, beispielsweise durch Erhöhung des Erregerstroms, d.h. der Generator wird so geregelt, dass dessen Ausgangsspannung bzw. dessen Ausgangsleistung erhöht wird. Optimalerweise wird der Kondensator DLC, der beispielsweise als Doppelschichtkondensator ausgebildet ist, so ausgelegt, dass er die während der Anregeldauer des Generators G vom Hochlastverbraucher V benötigte Energie bereitstellen kann, ohne dass die Spannung U1 unter eine untere Schwellenspannung sinkt. Diese untere Schwellenspannung wird beispielsweise so gewählt, dass keine Beschädigungen oder Störungen an Verbrauchern im Bordnetz auftreten.

Kann der Generator G die nötige Energie des Hochlastverbrauchers nicht bereitstellen und sinkt die Kondensatorspannung bzw. die Spannung U1 unter die vorbestimmte untere Schwellenspannung, schaltet der Schalter H wieder durch und versorgt den Hochlastverbraucher aus der Batterie B. Der Schalter H, beispielsweise ein MOSFET-Schalter muss durchschalten, falls die Kondensatorspannung höher ist als die Batteriespannung. Ist die Kondensatorspannung niedriger als die Batteriespannung, aber größer als eine bestimmte untere Schwellenspannung von beispielsweise 13 Volt, sperrt der Schalter H. Aus Sicherheitsgründen, d.h., damit der Hochlastverbraucher V immer sicher mit Energie versorgt wird, schaltet er wieder zu, sobald die Kondensatorspannung den bestimmten unteren Schwellenwert unterschreitet. In diesem Fall wird dann der Kurzzeithochlastverbraucher aus der Batterie versorgt. Dies ist für die Batterie zwar ungünstig und verringert deren Lebensdauer, da dieser Fall aber nur sehr selten auftritt, wird mit der erfmdungsgemäßen Schaltungsanordnung dennoch sichergestellt, dass die Zyklisierung der Batterie gegenüber anderen Bordnetzstrukturen deutlich verringert wird. Über die Wahl dieser Schwellenspannung kann das System appliziert werden, d.h. an bestimmte Bedingungen angepasst werden. Der Schalter H kann beispielsweise auf einem Bauteil als MOSFET-Schalter mit der nötigen Ansteuerbeschaltung aufgebaut werden. In einer Ausgestaltung ist auch ein mechanischer Schalter mit entsprechender Ansteuerung denkbar oder eine Reihenschaltung zweier MOSFETs.

Die spezielle Ausgestaltung des Bordnetzes ermöglich den Einsatz verschiedener Bordnetzkomponenten ohne große Änderungen am Gesamtsystem, dies gilt auch für die Kurzzeit-Hochlastverbraucher.

## Patentansprüche

1. Bordnetz mit Hochlastverbraucher für ein Fahrzeug mit wenigstens zwei elektrischen Ladungsspeichern, die über Schaltmittel zum Trennen oder Verbinden miteinander in Verbindung stehen, mit einem Generator, der mit dem ersten Ladungsspeicher und dem Hochlastverbraucher direkt verbunden ist, wobei bei Zuschaltung des Hochlastverbrauchers (V) die Schaltmittel (H) geöffnet werden und die Versorgung des Hochlastverbrauchers (V) aus dem ihm direkt zugeordneten ersten Ladungsspeicher (DLC) erfolgt, **dadurch gekennzeichnet, dass** wenigstens der Generator (G), der Hochlastverbraucher (V) und der erste Ladungsspeicher (DLC) ein Inselbordnetz bilden, das mittels der Schaltmittel (H) vom übrigen Bordnetz abtrennbar ist, wobei das übrige Berdnetz einen Starler (S) und eine Bordnetzbatterie (B) umfasst, wobei die Schaltmittel (H) wenigstens einen MOSFET-Schalter umfassen.

2. Bordnetz nach Anspruch 1, **dadurch gekennzeichnet, dass** der dem Hochlastverbraucher (V) zugeordnete erste Ladungsspeicher (DLC) ein Kondensator, insbesondere ein Doppelschichtkondensator, ist.

3. Bordnetz nach Anspruch 1 oder 2, **dadurch gekennzeichnet, dass** dem Generator (G) ein Regler (R) zugeordnet ist, der bei Zuschaltung des Hochlastverbrauchers (V) die Ausgangsleistung und/oder die Ausgangsspannung des Generators (G) erhöht.

4. Bordnetz nach einem der vorhergehenden Ansprüche, **dadurch gekennzeichnet, dass** die Schaltmittel (H), insbesondere der MOSFET-Schalter mit Hilfe eines elektrischen Energiemanagements (EEM) betätigt werden und das elektrische Energiemanagement (EEM) Informationen über herrschende Spannungen und/oder Regelzustände und/oder Drehzahlen (n) des Verbrennungsmotors (VM) oder des Generators (G) erhält und bei der Bildung von Ansteuersignalen berücksichtigt.

5. Bordnetz nach einem der vorhergehenden Ansprüche, **dadurch gekennzeichnet, dass** das Elektrische Energiemanagement ein eigenes Steuergerät ist oder als Bestandteil eines anderen Steuergerätes ausgebildet ist.

6. Verfahren zum Betreiben eines Bordnetzes mit den Merkmalen nach einem der vorhergehenden Ansprüche, wobei das Elektrische Energiemanagement (EMM) die Ansteuerung der Schaltmittel (H) so vornimmt, dass bei kurzzeitin für den Hochlastverbraucher (V) benötigter hoher elektrischer Leistung die Schaltmittel (H) geöffnet wird und die Schaltmittel (H) wieder geschlossen wird, wenn die Leistung des Generators zur Versorgung nicht ausreicht, **dadurch gekennzeichnet, dass** wenigstens der Generator (G), der Hochlastverbraucher (V) und der erste Ladungsspeicher (DLC) ein Inselbordnetz bilden, das mittels der Schaltmittel (H) vom übrigen Bordnetz abtrennbar ist, wobei das übrige Berdnetz einen Starler (S) und eine Bordnetzbatterie (B) umfasst, und als Schaltmittel (H) wenigstens ein MOSFET-Schalter verwendet wird.

7. Verfahren zum Betreiben eines Bordnetzes nach Anspruch 6, **dadurch gekennzeichnet, dass** die Spannungen (U1) und/oder (U2) ermittelt werden und mit vorgebbaren Schwellenspannungen verglichen werden und das Elektrische Enegiemanagement (EEM) in Abhängigkeit von den ermittelten Vergleichsergebnissen Ansteuersignale für die Schaltmittel (H) bildet.

8. Verfahren zum Betreiben eines Bordnetzes nach Anspruch 6, **dadurch gekennzeichnet, dass** die Schwellenspannungen an das betreffende Bordnetz bzw. System appliziert werden können.

## Claims

1. On-board electrical system having a high-load consumer for a vehicle having at least two electrical charge storage means which are connected to one another by means of switching means for breaking or establishing a connection, having a generator which is directly connected to the first charge storage means and to the high-load consumer, wherein the switching means (H) are opened when the high-load consumer (V) is switched on and the high-load consumer (V) is supplied with power from the first charge storage means (DLC) which is directly associated with it, **characterized in that** at least the generator (G), the high-load consumer (V) and the first charge storage means (DLC) form an on-board electrical system island which can be disconnected from the rest of the on-board electrical system by means of the switching means (H), wherein the rest of the on-board electrical system comprises a starter (S) and an on-board electrical system battery (B), wherein the switching means (H) comprise at least one MOSFET switch.

2. On-board electrical system according to Claim 1, **characterized in that** the first charge storage means (DLC) which is associated with the high-load consumer (V) is a capacitor, in particular a double-layer capacitor.

3. On-board electrical system according to Claim 1 or 2, **characterized in that** the generator (G) has an associated controller (R) which increases the output power and/or the output voltage of the generator (G) when the high-load consumer (V) is switched on.

4. On-board electrical system according to one of the preceding claims, **characterized in that** the switching means (H), in particular the MOSFET switch, are operated with the aid of an electrical energy management system (EEM), and the electrical energy management system (EEM) receives information about prevailing voltages and/or control states and/or rotation speeds (n) of the internal combustion engine (VM) or of the generator (G) and takes the said information into account when forming actuation signals.

5. On-board electrical system according to one of the preceding claims, **characterized in that** the electrical energy management system is a dedicated control device or is in the form of a constituent part of another control device.

6. Method for operating an on-board electrical system having the features according to one of the preceding claims, wherein the electrical energy management system (EEM) actuates the switching means (H) such that the switching means (H) are opened when a high electrical power is briefly required for the high-load consumer (V), and the switching means (H) are closed again when the power of the generator is not sufficient for power supply purposes, **characterized in that** at least the generator (G), the high-load consumer (V) and the first charge storage means (DLC) form an on-board electrical system island which can be disconnected from the rest of the on-board electrical system by means of the switching means (H), wherein the rest of the on-board electrical system comprises a starter (S) and an on-board electrical system battery (B), and at least one MOSFET switch is used as the switching means (H).

7. Method for operating an on-board electrical system according to Claim 6, **characterized in that** the voltages (U1) and/or (U2) are determined and are compared with prespecifiable threshold voltages, and the electrical energy management system (EEM) forms actuation signals for the switching means (H) as a function of the determined comparison results.

8. Method for operating an on-board electrical system according to Claim 6, **characterized in that** the threshold voltages can be applied to the relevant on-board electrical system or system.

## Revendications

1. Réseau de bord comprenant un consommateur à forte charge pour un véhicule, comprenant au moins deux accumulateurs de charge électriques qui sont en liaison l'un avec l'autre par le biais de moyens de commutation destinés à la déconnexion ou à la connexion, comprenant un générateur qui est relié directement avec le premier accumulateur de charge et le consommateur à forte charge, les moyens de commutation (H) étant ouverts lors de la mise en circuit du consommateur à forte charge (V) et l'alimentation du consommateur à forte charge (V) s'effectuant à partir du premier accumulateur de charge (DLC) qui lui est directement associé, **caractérisé en ce qu'**au moins le générateur (G), le consommateur à forte charge (V) et le premier accumulateur de charge (DLC) forment un réseau de bord îlot qui peut être déconnecté du reste du réseau de bord à l'aide des moyens de commutation (H), le reste du réseau de bord comprenant un démarreur (S) et une batterie de réseau de bord (B), les moyens de commutation (H) comprenant au moins un commutateur à MOSFET.

2. Réseau de bord selon la revendication 1, **caractérisé en ce que** le premier accumulateur de charge (DLC) associé au consommateur à forte charge (V) est un condensateur, notamment un condensateur à double couche.

3. Réseau de bord selon la revendication 1 ou 2, **caractérisé en ce qu'**au générateur (G) est associé un régulateur (R) qui, lors de la mise en circuit du consommateur à forte charge (V), augmente la puissance de sortie et/ou la tension de sortie du générateur (G).

4. Réseau de bord selon l'une des revendications précédentes, **caractérisé en ce que** les moyens de commutation (H), notamment le commutateur à MOSFET, sont actionnés à l'aide d'un gestionnaire d'énergie électrique (EEM) et le gestionnaire d'énergie électrique (EEM) reçoit des informations sur les tensions en présence et/ou les états de régulation et/ou les vitesses de rotation (n) du moteur à combustion (VM) ou du générateur (G) et en tient compte lors de la formation des signaux de commande.

5. Réseau de bord selon l'une des revendications précédentes, **caractérisé en ce que** le gestionnaire d'énergie électrique est un contrôleur propre ou est réalisé sous la forme d'un composant d'un autre contrôleur.

6. Procédé d'exploitation d'un réseau de bord ayant les caractéristiques selon l'une des revendications précédentes, le gestionnaire d'énergie électrique (EEM) effectuant la commande des moyens de commutation (H) de telle sorte qu'en présence d'une puissance électrique élevée nécessaire pour une courte durée pour le consommateur à forte charge (V), les moyens de commutation (H) sont ouverts et les moyens de commutation (H) sont de nouveaux fermés lorsque la puissance du générateur ne suffit pas pour l'alimentation, **caractérisé en ce qu'**au moins le générateur (G), le consommateur à forte charge (V) et le premier accumulateur de charge (DLC) forment un réseau de bord îlot qui peut être déconnecté du reste du réseau de bord à l'aide des moyens de commutation (H), le reste du réseau de bord comprenant un démarreur (S) et une batterie de réseau de bord (B), et au moins un commutateur à MOSFET étant utilisé comme moyens de commutation (H).

7. Procédé d'exploitation d'un réseau de bord selon la revendication 6, **caractérisé en ce que** les tensions (U1) et/ou (U2) sont déterminées et sont comparées avec des tensions de seuil pouvant être prédéfinies et le gestionnaire d'énergie électrique (EEM) forme des signaux de commande pour les moyens de commutation (H) en fonction des résultats déterminés de la comparaison.

8. Procédé d'exploitation d'un réseau de bord selon la revendication 6, **caractérisé en ce que** les tensions de seuil peuvent être appliquées au réseau de bord ou au système concerné.
